# EUROPEAN PATENT SPECIFICATION

(11) **EP 2 994 962 B1**
(45) Date of publication and mention of the grant of the patent: **30.12.2020**
(21) Application number: 14723071.8
(22) Date of filing: 09.05.2014
(51) Int. Cl.: H01S 3/30, H01S 3/067, H01S 3/16, H01S 3/23

(54) **A COHERENT DYNAMICALLY CONTROLLABLE NARROW BAND LIGHT SOURCE**
KOHÄRENTE DYNAMISCH STEUERBARE SCHMALBANDIGE LICHTQUELLE
SOURCE DE LUMIÈRE À BANDE ÉTROITE POUVANT ÊTRE COMMANDÉE DYNAMIQUEMENT COHÉRENTE

(30) Priority: 10.05.2013 EP 13167333
(43) Date of publication of application: 16.03.2016
(73) Proprietor: Medizinisches Laserzentrum Lübeck GmbH, 23562 Lübeck (DE)
(72) Inventor: HUBER, Robert Alexander, 83530 Schnaitsee (DE); KARPF, Sebastian, 80801 München (DE); EIBL, Matthias, 94104 Witzmannsberg (DE)
(74) Representative: Lucke, Andreas
(86) International application number: PCT/EP2014/059552
(87) International publication number: WO 2014/180983

(56) References cited:
- WO-A2-2007/127356
- US-A1- 2006 198 397
- US-A1- 2010 302 626
- EITAN E. ROWEN ET AL: "A combined Yb-Raman fiber amplifier for generating narrow linewidth, high-power pulses in the 1100-1200 nm wavelength range and efficient nonlinear conversion into yellow", PROCEEDINGS OF SPIE, vol. 8601, 22 February 2013 (2013-02-22), pages 86011J-1-86011J-8, XP055080588, ISSN: 0277-786X, DOI: 10.1117/12.2003831
- ATSUSHI UCHIDA ET AL: "Wide-Range All-Optical Wavelength Conversion Using Dual-Wavelength-Pumped Fiber Raman Converter", JOURNAL OF LIGHTWAVE TECHNOLOGY, IEEE SERVICE CENTER, NEW YORK, NY, US, vol. 16, no. 1, 1 January 1998 (1998-01-01), XP011029032, ISSN: 0733-8724

## Description

### FIELD OF THE INVENTION

The present invention is in the field of optics. In particular, the present invention relates to a coherent dynamically controllable narrow band light source involving a Raman-active material.

### BACKGROUND OF THE INVENTION

Coherent dynamically controllable narrow band light sources have many applications in medicine, life sciences, spectroscopy and environmental sensing. In many applications, it is preferable if the light source is controllable such that time-dependent intensity patterns, such as pulse patterns can be arbitrarily generated under electronic control. Further, it is often necessary to obtain high output power and in particular, high peak power in case of a pulsed operation. Finally, in many cases it is preferable if the light source can emit light of different wavelengths to make the light source more versatile.

A laser source which meets many of the above requirements is known from US 2006/0198397. This light source comprises a pulsed cascaded Raman laser which includes a pulse light source for generating a pulsed light having an optical spectrum centered at a source wavelength. A non-linear Raman conversion fiber is coupled to the pulse light source. The pulsed light traverses the non-linear Raman conversion fiber and the source power at the source wavelength is converted to an output power of an output signal having an output wavelength longer than the source wavelength due to a cascaded stimulated Raman scattering process.

In this prior art light source, a wavelength conversion is hence achieved by a cascaded stimulated Raman scattering. For this, the pulsed light signal is, after suitable amplification, combined with a Raman seed and introduced in a Raman conversion fiber. The seed-signal has a longer wavelength than the source signal and causes a first Raman scattering due to stimulated Raman emission in the Raman conversion fiber. Depending on the length of the Raman conversion fiber, further cascaded Raman scattering occurs, with correspondingly increasing the wavelength, such that different output wavelengths can be generated.

However, this prior art pulsed cascaded Raman laser also has drawbacks. In particular, one of the drawbacks is that the output bandwidth of the light source is generally limited by the bandwidth of the Stokes band of the Raman-active material. Namely, even if a Raman-active medium is pumped with a narrow band laser, the Raman scattered light generally has a certain bandwidth that reflects the width of the Stokes band of the Raman-active medium. With simulated Raman emission, a narrow band scattered light can be obtained if the probe light is of narrow width. However, in a cascaded Raman laser as described in the above prior art, stimulated Raman emission serves as the pump light for further Raman scattering, and this further Raman scattering is no longer stimulated but exhibits the emission bandwidth reflecting the entire Stokes band. For example, if an optical fiber is used as the Raman-active medium, a typical frequency shift in a certain range of 13 to 15 THz is obtained. Further, in the above-mentioned prior art, the light source lacks of flexibility in the time control of the light source.

WO2007/127356 A2 discloses a laser system comprising a pulsed light source generating a pulsed light having an optical spectrum centered at a source wavelength and a Raman conversion fiber coupled to the pulsed light source, wherein the pulsed light traverses the nonlinear Raman conversion fiber and is converted by an cascaded stimulated Raman scattering process into a first pulsed light output corresponding to the last Stokes order and having an optical spectrum centered at a first output wavelength, which is longer than the source wavelength. A narrow band Raman seed corresponding to said first output wavelength is provided. Optionally, lasers seeding intermediate Stokes orders can be employed. According to this document, the bandwidth of the pulsed light output is governed by the bandwidth of the Raman seed corresponding to the first output wavelength, while neither the pulse light source nor the lasers seeding intermediate Stokes orders are required to have a very narrow spectral output, and where a width of less than 1 nm is generally found sufficient.

*"*A combined Yb-Raman fiber amplifier for generating narrow linewidth, high-power pulses in the 1100-1200 nm wavelength range and efficient nonlinear conversion into Yellow" by Eitan E Rowen, Guy Vashdi, Jacob Lasri and Eran Inbar (V-Gen Ltd, 120 Yigal Alon St., Tel Aviv, Israel 67443) discloses a method and an apparatus for emitting narrow linewidth laser pulses in the 1100-1200 nm wavelength range. A narrowband CW laser at the desired wavelength is combined, together with a broadband pulsed laser at -1080 nm, into a Large-Mode-Area Ytterbium fiber amplifier. The increase in peak intensity leads to efficient Raman conversion of energy from the amplified 1080 nm pulses into the mode seeded by the CW laser. To demonstrate the concept, a narrowband CW diode at 1130 mm and a pulsed broadband laser at 1080 nm are combined to generate >15W pulses at 1130 nm with high beam quality and sub-100 pm linewidth, along with a demonstration of high efficiency nonlinear conversion into Yellow (565 nm).

### SUMMARY OF THE INVENTION

It is thus one object underlying the invention to provide a coherent dynamically controllable light source allowing for a non-linear frequency conversion but at the same time obtaining output light having a narrow bandwidth.

It is a further object to provide a coherent light source allowing for improved time control of the light output pattern.

The first object is solved by a light source according to claim 1 and a method according to claim 13. Preferable embodiments are defined in the dependent claims.

According to a first aspect of the invention, the light source comprises a first sub-light source, said first sub-light source being electrically controllable such as to generate controllable time-dependent intensity patterns of light having a first wavelength, a Raman-active medium suitable to cause Raman scattering of light having said first wavelength and exhibiting a wavelength shift within a range of Stokes shifts, a second sub-light source capable of emitting light with a second wavelength, said second wavelength being longer than said first wavelength and differing from said first wavelength by a wavelength shift within said range of Stokes shifts, and an optical fiber, wherein said light emitted by said first and second sub-light sources traverses a length of said optical fiber in a feed-forward configuration to facilitate a non-linear wavelength conversion step involving said Raman-active medium. Herein, both of said first and second sub-light sources have a coherence length longer than 2 mm.

According to this aspect of the invention, first and second sub-light sources and a Raman-active medium are provided in a manner similar to the prior art discussed above. In the invention, the first sub-light source is electronically controllable such as to generate controllable time-dependent intensity patterns. Further, the light source comprises an optical fiber in which the light emitted by the first and second sub-light sources traverses the length of said optical fiber in a feed-forward configuration to facilitate a non-linear wavelength conversion step involving the Raman-active medium. Herein, the "feed-forward configuration" can be a 1-4 pass feed-forward configuration. The "Feed-forward configuration" distinguishes the light source from a resonator-based light source. A feed-forward or "resonator-less" light source allows for flexible and fast electronic control of the intensity pattern.

Further, according to this aspect of the invention, both of said first and second sub-light sources have a minimum coherence length. In particular, both of the first and second sub-light sources have a coherence length longer than 2 mm.

The inventors have found out that surprisingly, if the first and second light sources have a sufficient coherence length, higher numbers of Raman shifts can be obtained while keeping the band width of the light signal below the width normally occurring due to spontaneous Raman emission in the Raman active medium. In fact, it is seen that consecutive Raman-shifted light signals can be obtained having a much narrower bandwidth than what would be expected from spontaneous Raman emission and which is shifted in frequency by multiples of the frequency difference between the first and second wavelength light. While a narrow bandwidth would be understandable for the first order Raman shifted light matching the second wavelength light due to the stimulated emission, for the higher order wavelength shifted light this is entirely unexpected, as there is no appropriate wavelength light source that could cause stimulated Raman scattering based on the first or higher order wavelength shifted light. Instead, for the "second or higher orders" of shifted light, it would appear that only vacuum fluctuations would be available for stimulating Raman emission, or in other words, a spontaneous Raman emission type process is expected to occur. Herein, the "order" of a shift shall indicate how many combined Raman processes are involved. For example, a third order shift would lead to a wavelength shift that corresponds to three times the frequency difference between the first and the second wavelength light. In the present disclosure, reference is made to "combined" Raman processes rather than "cascaded" Raman processes for reasons explained in more detail below.

Accordingly, it was surprisingly found that even for the "second order" shift a narrow Raman emission can be obtained that is much narrower than what would be expected from spontaneous Raman emission and that is shifted *precisely* by the frequency difference between the first and the second wavelength light. It thus appears that even for the generation of the second and the higher order wavelength shifts, the first wavelength light is involved in the combined Raman shift process. It is currently believed by the inventors that the underlying process is a four-wave-mixing type process which combines two Raman processes. This is why herein the term of "combined Raman processes" is used rather than cascaded processes, because the term "cascaded" relates to independent processes occurring one after the other. While a full understanding of the underlying process is still under investigation, the inventors have observed that this effect can be obtained provided that the coherence length of the first and second light sources is above the aforementioned lower boundary.

In a preferred embodiment, the wavelength converted light resulting from the wavelength conversion step has likewise a coherence length longer than 2 mm.

In a preferred embodiment, the light source further comprises a modulator for modulating light generated by the first or second sub-light source.

Herein, the modulator may be one of
- an electro-optical modulator,
- an acoustic-optical modulator, or
- a swept Fabry-Perot filter.

Among these modulators, an electro-optical modulator is particularly preferred because it allows generating almost arbitrary intensity patterns in a simple way, for example, under the control of a programmable function generator and/or a triggerable pulse generator. In particular, the modulator can be electronically controlled to generate one or more of:
- a CW light signal
- a periodic sinusoidal modulation or
- a light pulse pattern.

In a preferred embodiment, the pulse lengths of the light pulse pattern are at least 10 ps, preferably at least 20 ps and most preferably at least 30 ps. In addition or alternatively, the pulse length may be 50 ns or below, preferably 10 ns or below and most preferably 2.5 ns or below.

With this range of pulses, the light source can find use in many applications, including, but not limited thereto, stimulated Raman emission or photo-acoustic applications.

In a preferred embodiment, the modulator can be electronically controlled to configure the time delay between each two consecutive pulses with a mean repetition rate of 10 kHz or more, preferably 100 kHz or more, and most preferably 1 MHz or more.

Preferably, at least one of the first and second sub-light sources is a laser light source, and in particular a semi-conductor laser light source, preferably a semi-conductor laser diode.

The first sub-light source may have a wavelength in the range of 950 nm to 1200 nm, preferably in the range of 1000 to 1150 nm.

In a preferred embodiment, the first sub-light source has a wavelength of 1044 nm to 1084 nm, for optimum comparability with YAG laser optics.

In an alternative preferred embodiment, the wavelength of the first sub-light source may be in the range of 1010 to 1050 nm, for optimum amplification using Ytterbium as a gain medium.

In a yet further preferred embodiment, the wavelength of the first light source is between 950 nm and 1050 nm for enabling a maximum Raman shift.

Preferably, the wavelength of the second sub-light source is red-shifted compared to the wavelength of the first light source by 300 to 700 cm⁻¹.

In a further preferred embodiment, the first sub-light source may have a wavelength of 1450 to 1700 nm, preferably of 1480 to 1650 nm.

In a preferred embodiment at least one of the first and second sub-light sources has a spectral width narrower than 1 nm, preferably narrower than 0.1 nm.

In a preferred embodiment, the light source is operable with a duty cycle of less than 10 %, preferably less than 1% and most preferably less than 0.1%. The instantaneous power may be more than 10 W, preferably more than 100 W, more preferably more than 300 W and most preferably more than 1 kW.

In a preferred embodiment, the light source comprises at least one optical amplifier. The optical amplifier may for example be used to amplify the light signal generated by the first sub-light source and modulated by the aforementioned modulator.

In a preferred embodiment, the at least one optical amplifier comprises a gain medium and a third sub-light source for pumping said gain medium. Herein, the gain medium is preferably a rare-earth doped optical fiber, wherein said rare-earth is preferably one or more of Ytterbium, Erbium, Thulium, Holmium and Praseodymium.

A number of this type of optical amplifiers can be arranged in series to provide consecutive amplification stages. Such amplifiers are also referred to as master oscillator power amplifiers (MOPAs) in the art.

In a particularly preferred embodiment, at least one of the optical amplifiers comprises a double-clad fiber having a core portion formed by a rare-earth doped fiber and a cladding layer for guiding pump light. Herein, the core portion fiber is preferably a single-mode fiber and the cladding layer is providing multi-mode pump light. In this embodiment, the core portion carries the signal that is to be amplified only, while the pump light is guided in the cladding layer. Accordingly, the entire light capacity of the fiber can be dedicated to the light signal that is to be amplified. This compares favorably with applications where both, the pump light and the light signal to be amplified are confined to the same fiber. Further, since the cladding layer allows guiding multi-mode pump light, the intensity of the pump light can be comparatively high, thereby leading to a high amplification gain.

Preferably, the pump light is fed into the cladding layer in a direction opposite to that of the light propagating in the core portion. This avoids that the amplified light signal is contaminated with pump light.

In a preferred embodiment, the light source comprises two or more optical amplifiers, wherein between two optical amplifiers, a filter, in particular a laser line filter, is provided for filtering an amplified stimulated emission background. In this way the signal-to-noise ratio can be efficiently increased. In accordance with the invention the Raman-active medium is formed by an optical fiber, in particular a silica fiber.

The number of combined Raman shifts will depend on the length of the fiber. In accordance with the invention, the fiber length is selected such as to allow for at least two consecutive Raman wavelength shifts.

In a preferred embodiment, the non-linear wavelength conversion step is carried out in an optical amplifier, and in particular in the last optical amplification stage of the light source. Preferably, the light signal, i.e. the signal generated by the second sub-light source is introduced into the optical amplifier prior to or during amplification in the amplifier where the wavelength conversion step takes place. Namely, as long as the intensity of the original light signal generated by the first sub-light source and pre-amplified by one or more of the aforementioned amplifiers (i.e. the "first light signal") is still low, the Raman gain is made negligible, such that bringing in the light signal as a Raman-seed signal does not have any significant influence on the light. Only when the first wavelength light receives a strong amplification, the broadband Raman gain is seeded by the narrow second wavelength light (second light signal) acting as the Raman seed. In total, this leads to a narrow line width at the shifted wavelength, where the other properties of the initial signal generated by the first sub-light source can largely be conserved. In particular, this allows avoiding a parasitic Raman background in the spectrum.

In one embodiment, the second sub-light source may be a tunable light source, which in turn allows choosing the wavelengths obtainable by the wavelength conversion. For this, for example, a grating based tunable laser or a Fabry-Pérot tunable laser can be used. While in case of the combined Raman shifts several frequencies of output light are usually generated, the selection of the suitable wavelengths can be made using suitable filters at the location of use of the light. In some embodiments, however, the selection of the appropriate wavelengths can be achieved using optical filters in the fiber setup.

In some embodiments, the electro-optical modulator has a switch voltage of < 40 V, preferably < 10 V and most preferably < 5.6 V.

The fibers used in the light source may be polarization-conserving fibers. In particular, the fibers may be single-mode fibers of the group SMF28 or its equivalents or Hi1060 or its equivalents.

If a double cladding fiber is used for one of the optical amplifiers, the core diameter may be at least 3 µm, preferably at least 5 µm, and more preferably at least 6 µm. In addition or alternatively, the core diameter may be 18 µm or less, preferably 12 µm or less and more preferably 9 µm or less. In practice, the core diameter of the double cladding fiber may correspond to that of the single mode fibers used in the setup, for a better overlap of the modes.

In a preferred embodiment, the pulse length generated by a first sub-light source can be variably adjusted. In the preferred embodiment, the light source comprises one or more optical isolators. In a preferred embodiment, the first and second sub-light sources are synchronized with each other. Preferably, this synchronization is established electronically and in particular based on sharing common electrical signals or phase-locking electrical signals involved in the time control of the respective sub-light source.

In a preferred embodiment, the first sub-light source is capable of generating pulse patterns having pulses that are spaced in time with a time distance of less than 10 ns, preferably less than 2 ns and particularly preferably less than 1 ns. This can be used to suppress stimulated Brioullin scattering.

### BRIEF DESCRIPTION OF THE FIGURES

- Fig. 1: is a schematic overview of a light source according to an embodiment of the invention,
- Fig. 2: is a diagram showing the specific embodiment of the light source of Fig. 1, and
- Figs. 3 and 4: are spectra obtained with the light source of Fig. 2, showing narrow band-width wavelength conversion peaks.

### DESCRIPTION OF THE PREFERRED EMBODIMENTS

For the purposes of promoting an understanding of the principles of the invention, reference will now be made to the preferred embodiments illustrated in the drawings and specific language will be used to describe the same. It will nevertheless be understood that no limitation of the scope of the invention is intended thereby, such alterations and further modifications in the illustrated device and method and such further applications of the principles of the invention as illustrated therein being contemplated therein as would normally occur now or in the future to one skilled in the art to which the invention relates.

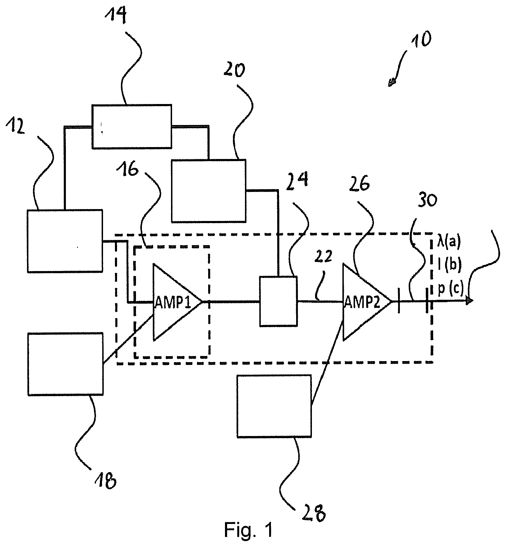

With reference to Fig. 1, a light source according to an embodiment of the invention is schematically shown.

In Fig. 1, a narrowband laser light source 12 resembling a first sub-light source generates an initial light signal, under the control of an electronic control unit 14. More precisely, the control unit 14 controls a suitable modulator (not shown) such as to arbitrarily modulate the amplitude and/or phase of the first sub-light source 12. The modulated light signal of the first sub-light source 12 is then amplified in an amplifier 16 having a gain medium that is pumped by a third sub-light source 18. While only one amplifier 16 is shown in Fig. 1, a plurality of amplifiers 16 can be arranged in series to thereby amplify the modulated output signal of the first sub-light source 12.

With further reference to Fig. 1, the modulated and amplified output signal can be shifted in wavelength using stimulated Raman emission. For this, a second sub-light source 20 generates a Raman shift seed-signal that is also fed into a Raman active medium, such as an optical fiber 22, 30. For this purpose, in the example of Fig. 1 a wavelength division multiplexer 24 is used. The Raman shift seed-signal generated by the second sub-light source 20 differs from the wavelength of the initial light signal generated by the first sub-light source 12 by a Stokes band of a Raman active medium, i.e. of the fiber 22, 30. The purpose of the Raman shift seed-signal is to induce stimulated Raman emission in a portion of the fiber 22, 30 to thereby generate a Raman-shifted output signal. For example, if the fiber 22 is a silica fiber of the type often used in telecommunication applications, a very intense signal can act as a pump source for a spontaneous Raman effect in the fiber 22. The strong narrow band pump signal would then usually be shifted towards a broad spectrum having a maximum intensity shift by 13 to 15 THz with respect to the pump signal. Using the Raman shift seed-signal generated by the second sub-light source 20, however, a stimulated emission is caused, and the broad spectrum known from the spontaneous Raman effect will be reduced to a narrow peak having the spectral properties of the Raman seed-signal.

Note that stimulated Raman scattering in an optical fiber only occurs at a significant amount when high powers are applied. For this, a second amplifier 26 is provided which likewise comprises a gain medium and is pumped by a forth sub-light source 28. While the fibers 22, 30 and the second amplifier 26 are shown as separate objects in the schematic view of Fig. 1, amplification and Raman shift may at least in part take place in one and the same fiber. The inventors have found out that it is advantageous to actually feed in the Raman shift seed-signal prior to the last amplification stage 26. Namely, as long as the intensity of the original light signal as generated by the first sub-light source 12 and preamplified by the amplifier 16 is still low, the Raman gain is negligible, such that bringing in the seed-signal does not have any significant impact on the light. Only if the original light receives a strong amplification in the second amplifier 26, the broad band Raman gain will be seeded by the narrow Raman seed. In total this leads to a narrow line width at the shifted wavelength, wherein the pulse properties of the initial signal generated by the first sub-light source 12 can largely be conserved. In particular, this allows avoiding a parasitic Raman background in the spectrum.

With further reference to Fig. 1, downstream of the second amplifier 26, an optical fiber 30 is shown which may act as the Raman active medium for further intended wavelength shifts. Based on the length of the optical fiber 30, the Raman shift can be repeated in the sense that two or more Raman shifts may occur in sequence, thereby allowing for another one or even more wavelength shifts. The optical fiber 30 can also be split into different fibers of different lengths to generate outputs with different wavelength shifts due to a different number of consecutive Raman shifts.

In fact, the inventors noticed that in the fiber 30, the Raman shifts are not simply "repeated" in the sense of a cascaded Raman scattering process where the individual Raman processes are unrelated to each other. Instead, provided that the coherence lengths of the first and/or second light sources 12, 20 are sufficiently long, it is seen that the first sub-light source light also plays a role in the generation of "second order" Raman shifted light, i.e. the light that is shifted towards longer wavelengths as compared to the second wavelength by a wavelength corresponding to the frequency difference of the first and second light sources. This is evidenced by the fact that the frequency shift between the second order Raman shifted light and the first order Raman shifted light matches *precisely* the frequency difference between the first and second light sources, and that the second order Raman shifted light has a bandwidth that is much narrower than the ordinary bandwidth expected from spontaneous Raman emission. Accordingly, by providing for sufficient coherence length in the first and/or second light sources 12, 20 this effect can be used to generate narrowband shifted output light that is considerably narrower than the inherent Stokes band of a fiber that would in fact lead to frequency shifts in a rather broad range of 13 to 15 THz.

The second sub-light source 20 may be a tunable laser light source, for example a grating based tunable light source or a Fabry-Perot tunable laser. One or all of the sub-light sources 12, 18, 20, 28 may have a polarization analyzer or other polarization control means. This is particularly important for the second sub-light source 20, because the Raman gain strongly depends on the polarization of pump and Stokes light. It is maximal for parallel and minimal for orthogonal polarization. Since there are birefringence fracturations in the fiber, the polarization of the Stokes and pump light will change for each wavelength differently during propagation in the fiber. This will lead to different gains if different stress or strain is applied to the fiber or if temperature changes are present, as these effects have an impact on the birefringence of the fiber. To be able to optimize the polarization in terms of the above mentioned impacts, a polarization analyzer or polarization controller is preferably used in the generation of the Raman shift seed light.

The wavelength of the first sub-light source 12 is preferably between 1044 and 1084 nm, preferably between 1054 and 1074 nm, because this allows for a compatibility with most YAG laser optics. In an alternative embodiment, the output wavelength of the first sub-light source 12 is between 1010 und 1050 nm, more preferably between 1020 and 1040 nm, because this allows for a maximum amplification using Ytterbium as the gain medium, which is a preferred material for this purpose. In yet an alternative embodiment, the wavelength of the first sub-light source 12 is in the range of 950 to 1050 nm, preferably 980 to 1020 nm, to allow for a maximum Raman shift.

Preferably, the wavelength of the Raman shift seed signal is redshifted as compared to the wavelength of the first sub-light source 12 by 300 to 700 cm⁻¹, preferably by 400 to 600 cm⁻¹.

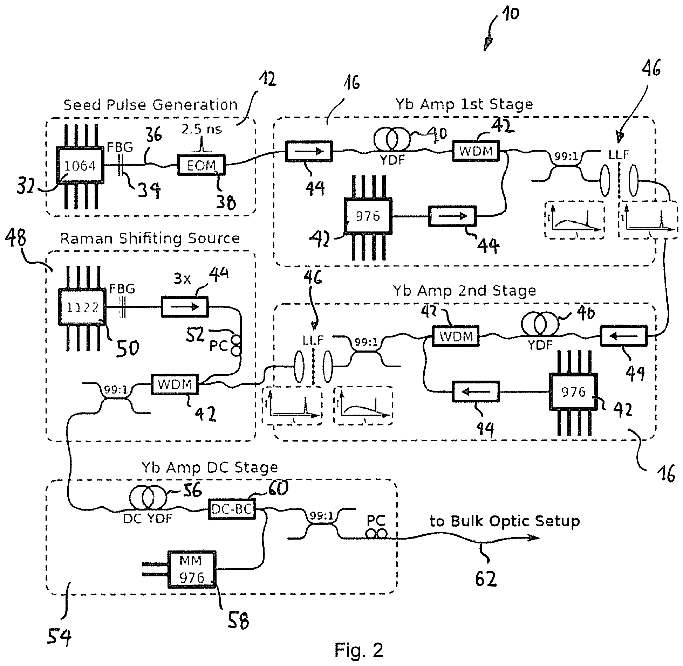

With reference to Fig. 2, a specific embodiment of the light source 10 according to Fig. 1 is shown. Corresponding components are designated with identical reference signs.

As shown in Fig., a first sub-light source 12 is provided for generating a seed light pulse. The first sub-light source 12 comprises a 1064 nm laser diode 32 with a fiber Bragg grating 34. The laser diode 32 is connected via a polarization maintaining fiber 36 to an electro optical modulator 38 which modulates the light signal from the laser diode 32 to generate pulses with a duration of 2.5 ns at desired timing, under control of a control unit like the control unit 14 of Fig. 1, which is not shown in Fig. 2. Actually, the electro optical modulator 38 would allow for shorter light pulses, as short as 100 ps only if desired.

Downstream of the first sub-light source 12, a first amplification stage 16 is provided. The first amplification stage 16 comprises an Ytterbium doped fiber 40 as a gain material which is pumped by a 976 nm laser diode 42. The pump light is coupled into the Ytterbium doped fiber 40 by means of a wave division multiplexer (WDM) 42. In the optical fibers, isolators 44 are further provided. The length of the Ytterbium doped optical fiber 40 is chosen to yield a good compromise between gain and amplified stimulated emission (ASE). A preferable length of the Ytterbium doped fiber 40 is between 1.5 and 2.5 meters.

The thus amplified light signal is fed through a laser line filter 46 into a second amplification stage 16 which is generally the same as the first amplification stage 16 and therefore does not need to be described again.

The laser line filter 46 serves to filter the ASE background, as is apparent from the illustrative boxes shown in Fig. 2. Instead of laser line filters, other filter designs can be used.

A Raman shifting source 48 is provided for generating a Raman shift seed signal. The Raman shifting source corresponds to the second sub-light source 20 in Fig. 1. The Raman shifting source 48 comprises a 1122 nm laser diode 50 which may be selectively turned on or off under control of a control unit (not shown), depending on whether a Raman shift of the output light is intended or not. Light from the 1122 nm laser diode 50 is fed through a polarization controller 52 allowing adjusting the polarization of the Raman shift seed signal such as to cause an optimum stimulated Raman emission. The polarization adjusted light from the 1122 nm light source 50 is coupled into the 1064 nm light pulse signal that was shaped by the electro optical modulator 38 and amplified in the two amplification stages 16 via another WDM 42.

Both, the 1122 nm Raman shift seed signal and the pre-amplified 1064 nm pulse are fed into a final amplification stage 54 which is also referred to as a double clad (DC) amplification stage schematically shown in Fig. 2. A double clad fiber usually consists of three layers of material, namely a core, a first cladding and a second cladding. With a decreasing refractive index from core to second cladding, light can be guided in the core and in the first cladding, respectively.

The final amplification stage 54 comprises a double cladding fiber 56 having a single-mode Ytterbium doped core and a first cladding, to which 976 nm pump light generated by a 976 nm multimode pump source 58 is fed via a double clad-beam combiner 60.

Since multi-mode pump light is fed into the first cladding of the double cladding fiber 56, a very strong amplification can be generated. Namely, using a multimode diode 58 higher intensities can be achieved as compared to a single mode diode. Also, while in the first and second amplification stages 16 the single-mode Ytterbium doped fibers 40 need to carry both, the signal as well as the pump light, in the double clad fiber 56 of the final amplification stage 54, the Ytterbium doped core fiber is reserved for the signal only, such that the full capacity thereof can be used for the signal. As seen in Fig. 2, the multimode pump light is directed in opposite direction to the propagation direction of the signal within the core of the double clad fiber 56 such that the pump light will not contaminate the amplified 1064 nm light.

When the laser diode 50 of the Raman shifting source 48 is turned off, the final amplification stage 54 simply amplifies the 1064 nm pulse. However, if the Raman shifting source 50 is turned on, the light of the Raman shifting source 48 acts as a stimulated Raman emission seed signal within a fiber 62 leading to a bulk optic setup or some sample location or the like (not shown in Fig. 2), where the light generated by the light source 10 is to be employed.

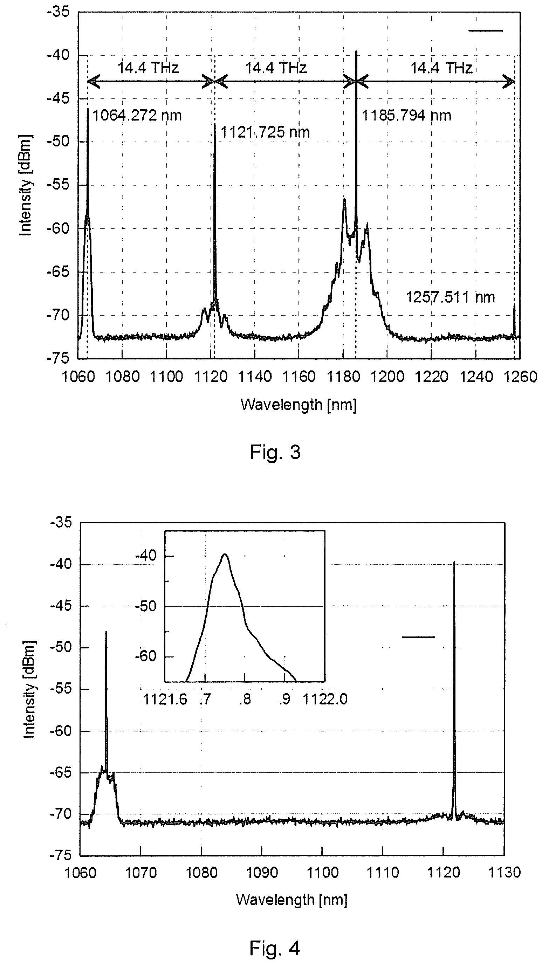

Fig. 3 shows the spectrum of the light obtained in the fiber 62 of Fig. 2, if the Raman shifting source 48 is turned on. As is shown in Fig. 3, a spectrally narrow 1064 nm (1064.272 nm) (i.e. non-shifted) spectral peak is obtained, as is to be expected. Further, a peak at about 1122 nm (1121.725 nm) is observed which is due to the stimulated Raman emission with a Raman seed signal of this wavelength. The frequency shift between these two signals is 14.4 THz, as is also indicated in Fig. 3, which corresponds to a Stokes band of the silica material constituting the fiber 62. Further note that an additional peak is present at about 1185 nm (1185.794 nm), i.e. at a further frequency shift of 14.4 THz. This peak is again very narrow, although no corresponding Raman seed signal is applied. A fourth, but smaller peak is seen at about 1257 nm (1257.511 nm). Further, Fig. 4 shows a close-up of the spectrum of the non-shifted peak at 1064 nm and the Raman shifted peak at 1122 nm.

It is a very surprising result that also the second order Raman shifted light at 1185 nm has a narrow peak that cannot be explained by independent "cascaded" Raman processes. As explained in the introductory portion, this effect is attributed to the coherence length of the light from the first and/or second light sources 12, 20, allowing for four-wave-mixing type processes.

As is seen from Fig. 3 and 4, using the stimulated Raman emission, narrow wavelength signals at different wavelengths can be generated, wherein the frequency shift depends on the Raman shift seed signal and can therefore to some extent be adjusted by the design. It is also found that the timing and the pulse shape of the amplified and Raman shifted signal are still very similar to the original pulse prior to amplification, i.e. as generated by the first sub-light source 12 and modulated by the electro optical modulator 38. Accordingly, the light source 10 allows generating light signals of practically arbitrary shape, owing to the modulation by the electro optical modulator 38, with very strong amplification as effected by the first and second amplification stages 16 and the final amplification stage 54, and with an optional frequency shift by one or more combined Raman shifts.

This light source 10 as shown in Fig. 2 is hence ideally suited for many applications, because it allows
- generating short light pulses at precisely electronically configurable, programmable timings,
- generating very high peak powers of several kilowatts and
- for optional frequency shifts while maintaining a narrow band width.

As was explained with reference to Fig. 1 above, the number of repeated Raman shifts arising will depend on the length of the fiber 62. Accordingly, the desired wavelength shift can be controlled by the length of the fiber 62. In some embodiments, fibers 62 with different lengths can be attached, giving rise to the desired number of repeated Raman shifts, or, in other words, the desired output wavelength. It is also possible to permanently attach a short fiber 62 (for 1122 nm light) and a longer fiber 62 (for 1185 nm light) using a suitable coupler, and yet longer fibers 62 for even longer wavelengths.

In one embodiment, the amplification and Raman shift occur simultaneously in the same optical fiber. In one embodiment, a tunable light source is used for generating the Raman shift seed signal, which in turn allows choosing the wavelength obtainable by the combined stimulated Raman shifts. For this, for example, a grating based tunable laser or a Fabry-Perot tunable laser can be used. While in case of the repeated Raman shift several frequencies of output light are usually generated, the selection of these suitable wavelengths can be chosen using suitable filters at the location of use of the output light. In some embodiments, the selection of the appropriate wavelengths can be achieved using a fiber Bragg grating which is connected via a circulator. It is, however, also possible to select the wavelengths using optical filters in the fiber setup.

In some embodiments, the modulator 38 is an electro optical modulator having a switch voltage of < 40 Volt, preferably < 10 Volt and most preferably < 5.6 Volt.

In some embodiments, the seed signal is modulated, by means of the EOM 38, with a frequency of more than 200 MHz, preferably more than 500 MHz, more preferably more than 1 GHz, more than 2.5 GHz or more than 10 GHz, with regard to either one of amplitude or phase.

Moreover, some of the fibers used in the light source 10 may be polarization conserving fibers. In particular, the fibers may be single-mode fibers of the group SMF28 or its equivalents or Hi1060 or its equivalents.

In an alternative embodiment, the first sub-light source 12, i.e. the "seed light source", can be made tunable. In particular, the first sub-light source 12 could be a rapidly tunable light source or swept light source, such as an FDML laser that can be used together with a modulator such as the EOM 38 shown in Fig. 2. However, other tunable light sources can likewise be used for the seed pulse generation.

Further, instead of the laser line filters 46 shown in Fig. 2, which are used for suppressing the spectral background caused by the rare earth doped fiber amplifiers, a combination of an optical circulator and a fiber Bragg grating may be used, such that a completely fiber-based setup can be achieved. In addition or alternatively, narrowband wavelength division multiplexers, fiber Fabry-Perot filters or fiber-based spectral filter elements can be employed.

The embodiments described above and the accompanying figures merely serve to illustrate the system of the present invention, and should not be taken to indicate any limitation thereof. The scope of the patent is solely determined by the following claims.

### LIST OF REFERENCE SIGNS

- 10: light source
- 12: first sub-light source
- 14: control unit
- 16: amplifier
- 18: third sub-light source
- 20: second sub-light source
- 22: optical fiber
- 24: wavelength division multiplexer
- 26: second amplifier
- 28: fourth sub-light source
- 30: optical fiber
- 32: laser diode
- 34: fiber Bragg grating
- 36: polarization maintaining fiber
- 38: electro-optical modulator
- 40: Ytterbium-doped fiber
- 42: laser diode
- 44: optical isolator
- 46: laser line filter
- 48: Raman shifting source
- 50: laser diode
- 52: polarization controller
- 54: final amplification stage
- 56: double-cladding fiber
- 58: multi-mode pump source
- 60: double-clad-fiber beam combiner
- 62: optical fiber

## Claims

1. A coherent dynamically controllable narrow band light source (10), comprising
- a first sub-light source (12), said first sub-light source (12) being electrically controllable such as to generate controllable time-dependent intensity patterns of light having a first wavelength,
- a second sub-light source (20) capable of emitting light with a second wavelength, said second wavelength being longer than said first wavelength, and
- a Raman active medium (30, 62) suitable to cause Raman scattering of light having said first wavelength, wherein said Raman active medium is formed by an optical fiber (22, 30, 62), wherein said light emitted by said first and second sub-light sources (12, 20) traverses a length of said optical fiber (22, 30, 62) in a feed-forward configuration to facilitate a non-linear wavelength conversion step,
wherein both of said first and second sub-light sources (12, 20) have a coherence length longer than 2 mm, wherein the length of said fiber (22, 30, 62) is selected such as to allow for at least two consecutive Raman wavelength shifts, wherein the frequency shift associated with the at least two consecutive Raman wavelength shifts is a corresponding multiple of the difference between said second and first wavelengths, and wherein narrow bandwidth second or higher order Raman wavelength shifted light is generated by a combination of four-wave-mixing type processes and Raman processes without stimulated emission caused by a further Raman seed source of a corresponding wavelength.

2. The light source (10) of claim 1, wherein the second or higher order Raman wavelength shifted light resulting from said wavelength conversion step has a coherence length longer than 2 mm.

3. The light source (10) of claim 1 or 2, further comprising a modulator (38) for modulating light generated by the first or second sub-light source (12, 20),
wherein said modulator is preferably one of
- an electro-optical modulator (38),
- an acoustic-optical modulator, or
- a swept Fabry-Perot filter.

4. The light source (10) of claim 3, wherein said modulator (38) can be electronically controlled to generate one or more of:
- a CW light signal
- a periodic sinusoidal modulation or
- a light pulse pattern,
wherein the pulse lengths of the light pulse pattern are preferably at least 10 ps, more preferably at least 20 ps and most preferably at least 30 ps and/or preferably 50 ns or below, more preferably 10 ns or below and most preferably 2.5 ns or below, and/or wherein the modulator (38) can be preferably electronically controlled to configure the time delay between each two consecutive pulses with a mean repetition rate of 10 kHz or more, preferably 100 kHz or more, and most preferably 1 MHz or more.

5. The light source (10) of one of the preceding claims, wherein at least one of the first and second sub-light sources (12, 20) is a laser light source, and in particular a semi-conductor laser light source, preferably a semiconductor laser diode, and/or
wherein said first sub-light source (12) has a wavelength of 950 nm to 1200 nm, and preferably a wavelength of 1000 nm to 1150 nm, or a wavelength of 1450 to 1700 nm, and preferably a wavelength of 1480 to 1650 nm, and/or
wherein at least one of the first and second sub-light sources (12, 20) has a spectral width narrower than 1 nm, preferably narrower than 0.1 nm.

6. The light source (10) of one of the preceding claims, wherein said light source is operable with a duty cycle of less than 10 %, preferably less than 1 % and most preferably less than 0.1 %, and/or
wherein the instantaneous power is more than 10 W, preferably more than 100 W, more preferably more than 300 W and most preferably more than 1 kW.

7. The light source (10) of one of the preceding claims, said light source comprising at least one optical amplifier (16, 26, 54).

8. The light source (10) of claim 7, wherein the at least one optical amplifier (16, 26, 54) comprises a gain medium (40, 56) and a third sub-light source (18, 28, 42, 58) for pumping said gain medium (40, 56),
wherein said gain medium (40, 56) is preferably a rare-earth doped optical fiber, wherein said rare-earth is preferably one or more of Ytterbium, Erbium, Thulium, Holmium, and Praseodymium,
wherein at least one of the optical amplifiers preferably comprises a double clad fiber (56) having a core portion formed by a rare-earth doped fiber, preferably by rare-earth doped single mode fiber, and a cladding layer for guiding pump light, preferably for guiding multimode pump light,
wherein said pump light is preferably fed into the cladding layer in a direction opposite to the light propagating in the core portion.

9. The light source (10) of one of claims 7 or 8, wherein said light source comprises two or more optical amplifiers (16, 26, 54), wherein between two optical amplifiers, a filter, in particular a laser line filter (46), is provided for filtering an amplified stimulated emission background.

10. The light source (10) of one of the preceding claims, wherein the Raman active medium is formed by a silica fiber.

11. The light source (10) of one of the preceding claims, wherein said non-linear wavelength conversion step is carried out, at least in part, in an optical amplifier, and in particular in the last optical amplification stage (54) of the light source.

12. The light source (10) of claim 11, wherein said second light signal is introduced into the optical amplifier (54) prior to or during amplification (54) in the amplifier where the wavelength conversion step takes place.

13. A method for generating coherent narrow band light comprising the following steps:
- generating light having a first wavelength using a first sub-light source (12),
- generating light having a second wavelength using a second sub-light source (20), said second wavelength being longer than said first wavelength,
- superposing in a feed-forward configuration said first and second wavelength light in an optical fiber (22, 30, 62) forming a Raman-active medium, thereby facilitating a non-linear wavelength conversion step,
wherein both of said first and second sub-light sources (12, 20) have a coherence length longer than 2 mm, wherein the length of said fiber (22, 30, 62) is selected such as to allow for at least two consecutive Raman wavelength shifts, and wherein the frequency shift associated with the at least two consecutive Raman wavelength shifts is a corresponding multiple of the difference between said second and first wavelengths, and wherein narrow bandwidth second or higher order Raman wavelength shifted light is generated by a combination of four-wave-mixing processes and Raman processes without stimulated emission caused by a further Raman seed source of a corresponding wavelength.

14. The method of claim 13, wherein the second or higher order Raman wavelength shifted light resulting from said wavelength conversion step has a coherence longer than 2 mm, and/or
wherein the method further comprises a step of modulating light generated by the first or second sub-light source, in particular using one of an electro-optical modulator (38), an acoustic-optical modulator or a swept Fabry-Perot filter, and/or
wherein the method further comprises a step of amplifying light generated by one of said first and second sub-light sources, using an amplifier comprising a gain medium (40, 56) and a third sub-light source (18, 28, 42, 58) for pumping said gain medium (40, 56), wherein said gain medium (40, 56) is preferably a rare earth doped optical fiber.

15. The method of one of claims 13 or 14, wherein the non-linear wavelength conversion step is carried out at least in part in an optical amplifier (54), in particular in the last optical amplification stage of the light source,
wherein a light signal generated by said second sub-light source (20) is preferably introduced into the optical amplifier prior to or during amplification in the amplifier (54) where at least part of the wavelength conversion step takes place, and/or
wherein a light signal generated by said second sub-light source (20) is preferably combined with light generated by the first sub-light source (12) prior to a final amplification stage (54) for amplifying said light generated by said first sub-light source (12).

## Patentansprüche

1. Kohärente, dynamisch steuerbare, schmalbandige Lichtquelle (10), umfassend
- eine erste Unterlichtquelle (12), wobei die erste Unterlichtquelle (12) elektrisch so steuerbar ist, dass sie steuerbare zeitabhängige Intensitätsmuster von Licht mit einer ersten Wellenlänge erzeugt,
- eine zweite Unterlichtquelle (20), die in der Lage ist, Licht mit einer zweiten Wellenlänge auszusenden, wobei die zweite Wellenlänge länger als die erste Wellenlänge ist, und
- ein aktives Raman-Medium (30, 62), das geeignet ist, Raman-Streuung von Licht mit der ersten Wellenlänge zu bewirken, wobei das aktive Raman-Medium durch eine optische Faser (22, 30, 62) gebildet wird, wobei das von der ersten und der zweiten Unterlichtquelle (12, 20) emittierte Licht eine Länge der optischen Faser (22, 30, 62) in einer Feedforward-Konfiguration durchquert, um einen nichtlinearen Wellenlängenumwandlungsschritt zu erleichtern,
wobei sowohl die erste als auch die zweite Unterlichtquelle (12, 20) eine Kohärenzlänge von mehr als 2 mm aufweisen, wobei die Länge der Faser (22, 30, 62) so gewählt ist, dass sie mindestens zwei aufeinanderfolgende Raman-Wellenlängenverschiebungen zulässt, wobei die Frequenzverschiebung, die mit den mindestens zwei aufeinanderfolgenden Raman-Wellenlängenverschiebungen assoziiert ist, ein entsprechendes Vielfaches der Differenz zwischen der zweiten und der ersten Wellenlänge ist, und wobei schmalbandiges, durch Raman-wellenlängenverschobenes Licht zweiter oder höherer Ordnung durch eine Kombination von Vier-Wellen-Mischprozessen und Raman-Prozessen ohne stimulierte Emission erzeugt wird, die durch eine weitere Raman-Seed-Quelle einer entsprechenden Wellenlänge verursacht würde.

2. Lichtquelle (10) nach Anspruch 1, wobei das Raman-wellenlängenverschobene Licht zweiter oder höherer Ordnung, das aus dem Wellenlängenumwandlungsschritt resultiert, eine Kohärenzlänge von mehr als 2 mm hat.

3. Die Lichquelle (10) nach Anspruch 1 oder 2, die weiterhin einen Modulator (38) zum Modulieren von Licht umfasst, das von der ersten oder zweiten Unterlichtquelle (12, 20) erzeugt wird,
wobei der Modulator vorzugsweise eines der folgenden ist
- ein elektro-optischer Modulator (38),
- ein akustisch-optischer Modulator, oder
- ein durchgestimmter Fabry-Pérot-Filter.

4. Die Lichtquelle (10) nach Anspruch 3, wobei der Modulator (38) elektronisch gesteuert werden kann, um einen oder mehrere von:
- einem CW-Lichtsignal
- einer periodischen sinusförmigen Modulation oder - ein Lichtpulsmuster zu erzeugen,
wobei die Pulslängen des Lichtpulsmusters vorzugsweise mindestens 10 ps, bevorzugter mindestens 20 ps und am meisten bevorzugt mindestens 30 ps und/oder bevorzugt 50 ns oder weniger, bevorzugter 10 ns oder weniger und am meisten bevorzugt 2,5 ns oder weniger betragen, und/oder
wobei der Modulator (38) vorzugsweise elektronisch gesteuert werden kann, um die Zeitverzögerung zwischen jeweils zwei aufeinanderfolgenden Pulsen mit einer mittleren Wiederholungsrate von 10 kHz oder mehr, vorzugsweise 100 kHz oder mehr, und am meisten bevorzugt 1 MHz oder mehr, zu konfigurieren.

5. Lichtquelle (10) nach einem der vorhergehenden Ansprüche, wobei mindestens eine der ersten und zweiten Unterlichtquelle (12, 20) eine Laserlichtquelle ist, und insbesondere eine Halbleiter-Laserlichtquelle, vorzugsweise eine Halbleiter-Laserdiode, und/oder
wobei die erste Unterlichtquelle (12) eine Wellenlänge von 950 nm bis 1200 nm, und vorzugsweise eine Wellenlänge von 1000 nm bis 1150 nm, oder eine Wellenlänge von 1450 bis 1700 nm, und vorzugsweise eine Wellenlänge von 1480 bis 1650 nm, aufweist, und/oder
wobei mindestens eine der ersten und zweiten Teillichtquelle (12, 20) eine spektrale Breite schmaler als 1 nm, vorzugsweise schmaler als 0,1 nm, aufweist.

6. Lichtquelle (10) nach einem der vorhergehenden Ansprüche, wobei die Lichtquelle mit einem Tastverhältnis von weniger als 10 %, vorzugsweise weniger als 1 % und am meisten bevorzugt weniger als 0,1 %, betreibbar ist, und/oder
wobei die Momentanleistung mehr als 10 W, vorzugsweise mehr als 100 W, besonders bevorzugt mehr als 300 W und am meisten bevorzugt mehr als 1 kW beträgt.

7. Lichtquelle (10) nach einem der vorhergehenden Ansprüche, wobei die Lichtquelle mindestens einen optischen Verstärker (16, 26, 54) umfasst.

8. Lichtquelle (10) nach Anspruch 7, wobei der mindestens eine optische Verstärker (16, 26, 54) ein Verstärkungsmedium (40, 56) und eine dritte Unterlichtquelle (18, 28, 42, 58) zum Pumpen des Verstärkungsmediums (40, 56) umfasst,
wobei das Verstärkungsmedium (40, 56) vorzugsweise eine mit Seltenen Erden dotierte optische Faser ist, wobei die Seltenen Erden vorzugsweise eines oder mehrere von Ytterbium, Erbium, Thulium, Holmium und Praseodym sind,
wobei mindestens einer der optischen Verstärker vorzugsweise eine Doppelmantelfaser (56) mit einem Kernteil, der aus einer mit einer seltenen Erde dotierten Faser, vorzugsweise aus einer mit einer seltenen Erde dotierten Monomodenfaser, gebildet ist, und einer Mantelschicht zum Führen von Pumplicht, vorzugsweise zum Führen von Multimoden-Pumplicht, umfasst,
wobei das Pumplicht vorzugsweise in einer Richtung entgegengesetzt zu dem sich im Kernteil ausbreitenden Licht in die Mantelschicht eingespeist wird.

9. Lichtquelle (10) nach einem der Ansprüche 7 oder 8, wobei die Lichtquelle zwei oder mehr optische Verstärker (16, 26, 54) umfasst, wobei zwischen zwei optischen Verstärkern ein Filter, insbesondere ein Laserlinienfilter (46), zum Filtern eines verstärkten Stimulierte-Emissionshintergrunds vorgesehen ist.

10. Lichtquelle (10) nach einem der vorhergehenden Ansprüche, wobei das Raman-aktive Medium durch eine Siliziumdioxidfaser gebildet wird.

11. Lichtquelle (10) nach einem der vorhergehenden Ansprüche, wobei der Schritt der nichtlinearen Wellenlängenumwandlung zumindest teilweise in einem optischen Verstärker und insbesondere in der letzten optischen Verstärkungsstufe (54) der Lichtquelle durchgeführt wird.

12. Lichtquelle (10) nach Anspruch 11, wobei das zweite Lichtsignal in den optischen Verstärker (54) vor oder während der Verstärkung (54) in dem Verstärker eingeführt wird, in dem der Schritt der Wellenlängenumwandlung stattfindet.

13. Verfahren zum Erzeugen von kohärentem schmalbandigem Licht, das die folgenden Schritte umfasst:
- Erzeugen von Licht mit einer ersten Wellenlänge unter Verwendung einer ersten Unterlichtquelle (12),
- Erzeugen von Licht mit einer zweiten Wellenlänge unter Verwendung einer zweiten Unterlichtquelle (20), wobei die zweite Wellenlänge länger als die erste Wellenlänge ist,
- Überlagerung des Lichts der ersten und der zweiten Wellenlänge in einer Feedforward-Konfiguration in einer optischen Faser (22, 30, 62), die ein Raman-aktives Medium bildet, wodurch ein nichtlinearer Wellenlängenumwandlungsschritt erleichtert wird,
wobei sowohl die erste als auch die zweite Unterlichtquelle (12, 20) eine Kohärenzlänge von mehr als 2 mm haben, wobei die Länge der Faser (22, 30, 62) so gewählt ist, dass sie mindestens zwei aufeinanderfolgende Raman-Wellenlängenverschiebungen zulässt, und wobei die Frequenzverschiebung, die den mindestens zwei aufeinanderfolgenden Raman-Wellenlängenverschiebungen zugeordnet ist, ein entsprechendes Vielfaches der Differenz zwischen der zweiten und der ersten Wellenlänge ist, und wobei schmalbandiges, Raman-wellenlängenverschobenes Licht zweiter oder höherer Ordnung durch eine Kombination von Vier-Wellen-Mischprozessen und Raman-Prozessen ohne stimulierte Emission erzeugt wird, die durch eine weitere Raman-Seed-Quelle einer entsprechenden Wellenlänge verursacht würde.

14. Verfahren nach Anspruch 13, wobei das wellenlängenverschobene Licht zweiter oder höherer Ordnung, das aus dem Wellenlängenumwandlungsschritt resultiert, eine Kohärenz aufweist, die länger als 2 mm ist, und/oder
wobei das Verfahren ferner einen Schritt des Modulierens von Licht umfasst, das von der ersten oder zweiten Unterlichtquelle erzeugt wird, insbesondere unter Verwendung eines elektro-optischen Modulators (38), eines akustisch-optischen Modulators oder eines durchgestimmten Fabry-Perot Filters, und/oder
wobei das Verfahren ferner einen Schritt des Verstärkens von Licht umfasst, das von einer der ersten und der zweiten Unterlichtquelle erzeugt wird, unter Verwendung eines Verstärkers, der ein Verstärkungsmedium (40, 56) und eine dritte Unterlichtquelle (18, 28, 42, 58) zum Pumpen des Verstärkungsmediums (40, 56) umfasst, wobei das Verstärkungsmedium (40, 56) vorzugsweise eine mit seltenen Erden dotierte optische Faser ist.

15. Verfahren nach einem der Ansprüche 13 oder 14, wobei der Schritt der nichtlinearen Wellenlängenumwandlung zumindest teilweise in einem optischen Verstärker (54) durchgeführt wird, insbesondere in der letzten optischen Verstärkungsstufe der Lichtquelle,
wobei ein von der zweiten Unterlichtquelle (20) erzeugtes Lichtsignal vorzugsweise vor oder während der Verstärkung im Verstärker (54), wo zumindest ein Teil des Wellenlängenumwandlungsschrittes stattfindet, in den optischen Verstärker eingeführt wird, und/oder
wobei ein von der zweiten Unterlichtquelle (20) erzeugtes Lichtsignal vorzugsweise mit von der ersten Unterlichtquelle (12) erzeugtem Licht vor einer Endverstärkungsstufe (54) zum Verstärken des von der ersten Unterlichtquelle (12) erzeugten Lichts kombiniert wird.

## Revendications

1. Source de lumière à bande étroite cohérente et contrôlable de manière dynamique (10), comprenant
- une première sous-source de lumière (12), ladite première sous-source de lumière (12) étant contrôlable électriquement de façon à générer des modèles d'intensité de lumière contrôlables et dépendant de la durée ayant une première longueur d'onde,
- une seconde sous-source de lumière (20) capable d'émettre une lumière avec une seconde longueur d'onde, ladite seconde longueur d'onde étant plus longue que ladite première longueur d'onde, et
- un milieu actif Raman (30, 62) adapté pour provoquer une diffusion Raman de la lumière ayant ladite première longueur d'onde, dans laquelle ledit milieu actif Raman est formé par une fibre optique (22, 30, 62),
dans laquelle ladite lumière émise par lesdites première et seconde sous-sources de lumière (12, 20) traverse une longueur de ladite fibre optique (22, 30, 62) dans une configuration de couplage vers l'avant afin de faciliter une étape de conversion de longueur d'onde non-linéaire,
dans laquelle lesdites première et seconde sous-sources de lumière (12, 20) possèdent une longueur de cohérence supérieure à 2 mm, dans laquelle la longueur de ladite fibre (22, 30, 62) est choisie de façon à permettre au moins deux décalages de longueur d'onde Raman consécutifs, dans laquelle le décalage de fréquence associé aux au moins deux décalages de longueur d'onde Rama consécutifs est un multiple correspondant de la différence entre lesdites seconde et première longueurs d'onde, et dans laquelle une lumière à décalage de longueur d'onde Raman à bande étroite de second ordre ou d'ordre plus élevé est générée par une combinaison de processus de mélange de quatre ondes et de processus Raman sans émission stimulée provoquée par une autre source Raman d'une longueur d'onde correspondante.

2. Source de lumière (10) selon la revendication 1, dans laquelle la lumière à décalage de longueur d'onde Raman de second ordre ou d'ordre plus élevé qui résulte de ladite étape de conversion de longueur d'onde présente une longueur de cohérence supérieure à 2 mm.

3. Source de lumière (10) selon la revendication 1 ou 2, comprenant en outre un modulateur (38) destiné à moduler la lumière générée par la première ou la seconde sous-source de lumière (12, 20),
dans laquelle ledit modulateur est de préférence l'un de
- un modulateur électro-optique (38),
- un modulateur acoustique/optique, ou
- un filtre De Fabry-Pérot à balayage.

4. Source de lumière (10) selon la revendication 3, dans laquelle ledit modulateur (38) peut être commandée électroniquement afin de générer un(e) ou plusieurs :
- d'un signal lumineux CW,
- d'une modulation sinusoïdale périodique, ou
- d'un modèle d'impulsion lumineuse,
dans laquelle les durées d'impulsion du modèle d'impulsion lumineuse sont de préférence d'au moins 10 ps, de préférence d'au moins 20 ps, et de préférence d'au moins 30 ps, et/ou de préférence de 50 ns ou moins, de préférence de 10 ns ou moins, et de préférence de 2,5 ns ou moins, et/ou dans laquelle le modulateur (38) peut être de préférence commandé électroniquement afin de configurer le retard temporel entre deux impulsions consécutives avec un taux de répétition moyen de 10 kHz ou plus, de préférence de 100 kHz ou plus, et de préférence de 1 MHz ou plus.

5. Source de lumière (10) selon l'une des revendications précédentes, dans laquelle au moins l'une de la première et de la seconde sous-sources de lumière (12, 20) est une source de lumière laser, et en particulier une source de lumière laser à semiconducteurs, de préférence une diode laser à semi-conducteur, et/ou dans laquelle ladite première sous-source de lumière (12) possède une longueur d'onde de 950 nm à 1200 nm, et de préférence une longueur d'onde de 1000 nm à 1150 nm, ou une longueur d'onde de 1450 à 1700 nm, et de préférence une longueur d'onde de 1480 à 1650 nm, et/ou
dans laquelle au moins l'une de la première et de la seconde sous-sources de lumière (12, 20) possède une largeur spectrale inférieure à 1 nm, de préférence inférieure à 0,1 nm.

6. Source de lumière (10) selon l'une des revendications précédentes, dans laquelle ladite source de lumière peut fonctionner avec un cycle de service inférieur à 10%, de préférence inférieur à 1%, et de préférence inférieur à 0,1%, et/ou dans laquelle la puissance instantanée est supérieure à 10 W, de préférence supérieure à 100 W, de préférence supérieure à 300 W, et de préférence supérieure à 1 kW.

7. Source de lumière (10) selon l'une des revendications précédentes, ladite source de lumière comprenant au moins un amplificateur optique (16, 26, 54).

8. Source de lumière (10) selon la revendication 7, dans laquelle le au moins un amplificateur optique (16, 26, 54) comprend un milieu de gain (40, 56) et une troisième sous-source de lumière (18, 28, 42, 58) destinée à pomper ledit milieu de gain (40, 56), dans laquelle ledit milieu de gain (40, 56) est de préférence une fibre optique dopée en terre rare,
dans laquelle ladite terre rare est de préférence un ou plusieurs d'ytterbium, d'erbium, de thulium, d'holmium, et de praséodyme,
dans laquelle au moins l'un des amplificateurs optiques comprend de préférence une fibre à revêtement double (56) ayant une partie de noyau formée par une fibre dopée en terre rare, de préférence par une fibre monomode dopée en terre rare, et une couche de revêtement destinée à guider la lumière de pompage, de préférence à guider la lumière de pompage multimode,
dans laquelle ladite lumière de pompage est de préférence fournie à la couche de revêtement dans une direction opposée à la lumière qui se propage dans la partie de noyau.

9. Source de lumière (10) selon l'une des revendications 7 ou 8, dans laquelle ladite source de lumière comprend deux amplificateurs optiques (16,26, 54) ou plus, dans laquelle, entre deux amplificateurs optiques, un filtre, en particulier un filtre à ligne laser (46), est prévu afin de filtrer un arrière-plan d'émission stimulé amplifié.

10. Source de lumière (10) selon l'une des revendications précédentes, dans laquelle le milieu actif Raman est formé par une fibre de silice.

11. Source de lumière (10) selon l'une des revendications précédentes, dans laquelle ladite étape de conversion de longueur d'onde non-linéaire est exécutée, au moins en partie, dans un amplificateur optique, et en particulier dans le dernier étage d'amplification optique (54) de la source de lumière.

12. Source de lumière (10) selon la revendication 11, dans laquelle ledit second signal lumineux est introduit dans l'amplificateur optique (54) avant ou pendant l'amplification (54) dans l'amplificateur dans lequel l'étape de conversion de longueur d'onde se produit.

13. Procédé de génération d'une lumière à bande étroite cohérente comprenant les étapes suivantes :
- la génération d'une lumière ayant une première longueur d'onde à l'aide d'une première sous-source de lumière (12),
- la génération d'une lumière ayant une seconde longueur d'onde à l'aide d'une seconde sous-source de lumière (20),
ladite seconde longueur d'onde étant plus longue que ladite première longueur d'onde,
- la superposition, dans une configuration de couplage vers l'avant, de la lumière à première et seconde longueurs d'onde dans une fibre optique (22, 30, 62) en formant un milieu actif Raman, afin de faciliter une étape de conversion de longueur d'onde non-linéaire,
dans laquelle lesdites première et seconde sous-sources de lumière (12, 20) possèdent une longueur de cohérence supérieure à 2 mm, dans laquelle la longueur de ladite fibre (22, 30, 62) est choisie de façon à permettre au moins deux décalages de longueur d'onde Raman consécutifs, et dans laquelle le décalage de fréquence associé aux au moins deux décalages de longueur d'onde Raman consécutifs est un multiple correspondant de la différence entre lesdites seconde et première longueurs d'onde, et dans laquelle une lumière à décalage de longueur d'onde Raman à bande étroite de second ordre ou d'ordre plus élevé est générée par une combinaison de processus de mélange de quatre ondes et de processus Raman sans émission stimulée provoquée par une autre source Raman d'une longueur d'onde correspondante.

14. Procédé selon la revendication 13, dans lequel la la lumière à décalage de longueur d'onde Raman de second ordre ou d'ordre plus élevé qui résulte de ladite étape de conversion de longueur d'onde présente une cohérence supérieure à 2 mm, et/ou
dans lequel le procédé comprend en outre une étape de modulation de la lumière générée par la première ou la seconde sous-source de lumière, en particulier à l'aide de l'un d'un modulateur électro-optique (38), d'un modulateur acoustique/optique, ou d'un filtre de Fabry-Pérot à balayage, et/ou
dans lequel le procédé comprend en outre une étape d'amplification de la lumière générée par l'une desdites première et seconde sous-sources de lumière, à l'aide d'un amplificateur comprenant un milieu de gain (40, 56) et d'une troisième sous-source de lumière (18, 28, 42, 58) destinée à pomper ledit milieu de gain (40, 56), dans laquelle ledit milieu de gain (40, 56) est de préférence une fibre optique dopée en terre rare.

15. Procédé selon l'une des revendications 13 ou 14, dans lequel l'étape de conversion de longueur d'onde non-linéaire est exécutée au moins en partie dans un amplificateur optique (54), en particulier dans le dernier étage d'amplification optique de la source de lumière,
dans lequel un signal lumineux généré par ladite seconde sous-source de lumière (20) est de préférence introduit dans l'amplificateur optique avant ou pendant l'amplification dans l'amplificateur (54) dans lequel au moins une partie de l'étape de conversion de longueur d'onde se produit, et/ou
dans lequel un signal lumineux généré par ladite seconde sous-source de lumière (20) est de préférence combinée avec la lumière générée par la première sous-source de lumière (12) avant un étage d'amplification final (54) destiné à amplifier ladite lumière générée par ladite première sous-source de lumière (12).
